# FASCICULE DE BREVET EUROPEEN

(11) **EP 3 670 083 B1**
(45) Date de publication et mention de la délivrance du brevet: **31.03.2021**
(21) Numéro de dépôt: 19215847.5
(22) Date de dépôt: 12.12.2019
(51) Int. Cl.: B25B 21/00, B25F 5/00

(54) **OUTIL PORTATIF ÉQUIPÉ D'UN MOTEUR PNEUMATIQUE ET D'UN SUPERCONDENSATEUR POUR CHARGER UNE BATTERIE ALIMENTANT DES ÉQUIPEMENTS**
TRAGBARES INSTRUMENT, DAS MIT EINEM PNEUMATISCHEN MOTOR UND EINEM SUPERKONDENSATOR ZUM AUFLADEN EINER GERÄTESPEISENDEN BATTERIE AUSGESTATTET IST
PORTABLE TOOL EQUIPPED WITH A PNEUMATIC ENGINE AND A SUPERCAPACITOR FOR CHARGING A BATTERY SUPPLYING EQUIPMENT

(30) Priorité: 21.12.2018 FR 1873997
(43) Date de publication de la demande: 24.06.2020
(73) Titulaire: ETABLISSEMENTS GEORGES RENAULT, 44800 Saint Herblain (FR)
(72) Inventeur: BARREAU, Simon, 44100 NANTES (FR); BEAUTES, Clément, 44118 LA CHEVROLIERE (FR); LATOUCHE, Julien, 44100 NANTES (FR)
(74) Mandataire: Vidon Brevets & Stratégie

(56) Documents cités:
- EP-A1- 0 255 433
- US-A1- 2010 148 582
- US-A1- 2011 109 093

## Description

### 1. Domaine de l'invention

Le domaine de l'invention est celui des outils industriels portatifs équipés d'un moteur pneumatique animant un élément dans un mouvement discontinu, et d'un moyen de conversion de l'énergie cinétique en une énergie électrique. Plus précisément, l'invention concerne le fait que l'énergie électrique alimente un condensateur qui charge une batterie pour alimenter des équipements montés sur l'outil.

### 2. Art antérieur

Le contexte de l'invention est celui de l'utilisation d'outillage pneumatique dans le cadre de la production industrielle et en particulier dans celui de l'industrie automobile. De tel outillage sont par exemple, des visseuses, des ponceuses, des clés à choc, etc.

Une clé à choc est un outil plus communément utilisé pour le serrage et le desserrage d'écrous et de vis, ce type d'outil présente l'avantage de minimiser voir d'annuler le retour de couple dans la main de l'opérateur. Cet outil peut-être électrique ou pneumatique. Le type de mécanisme habituellement utilisé dans les clés à choc pneumatique est dit « rebondissant » comme le mécanisme « Twin Hammer », ce mécanisme est entrainé par un moteur tournant et se comporte comme un embrayage intermittent. Le moteur entraine la cage et les marteaux du mécanisme contre le carré de sortie appelé dans le jargon de l'homme du métier : « Anvil ».

Il est souvent utile de mieux éclairer la surface située à l'avant de l'outil, En effet, ces outils sont le plus souvent utilisés dans des garages pour la réparation de camions et d'automobiles, et dans des endroits mal éclairés. Dans le cas de vis se situant dans des volumes étroits, la manœuvre peut manquer de visibilité et il est nécessaire d'éclairer la zone lors des opérations de production ou de maintenance. Le manque de visibilité peut entrainer une perte de productivité et de qualité de travail.

Dans le cas d'outil pneumatique, il n'y a pas besoin de fils électriques alimentant un quelconque élément électrique utilisable pour le travail de l'outil. Il n'est donc généralement pas possible d'utiliser une énergie fournie par des fils pour alimenter une lampe. De nos jours, diverses méthodes d'éclairage existent dont voici ci-dessous une liste non exhaustives en énonçant certains avantages et inconvénient :
- La baladeuse. Cet appareil est léger mais ne passe pas partout et fait de l'ombre lorsque l'outil est devant.
- Le stylo Baladeuse. Cet appareil est léger et passe partout mais fait de l'ombre lorsque l'outil est devant.
- Lampe devant l'outil. Cet appareil permet de bien éclairer la zone devant l'outil mais rallonge le nez de l'outil et diminue de l'accessibilité à la zone de travail. Il utilise de l'énergie électrique de l'appareil, diminuant ainsi son autonomie.
- Lampe portative à batterie. Cet appareil éclaire bien la zone de travail, il peut se solidariser à l'outil, mais son autonomie dépend de la capacité de sa batterie. Lors des recharges, il faut retirer la batterie, la monter sur un chargeur, puis faire l'opération inverse, ce qui peut prendre beaucoup de temps.

Dans le cas de l'alimentation d'une source lumineuse pour éclairer la zone à l'avant de l'outil, il existe donc un réel besoin d'un équipement pour fournir de l'énergie électrique à une lampe. Il est connu d'embarquer une dynamo dans un outil pour produire une tension électrique servant à alimenter une source lumineuse. Cette dynamo ne produisant de l'énergie qu'avec la rotation du moteur, il est également connu d'utiliser une batterie qui est chargée par la dynamo et qui alimente un équipement même après l'arrêt de la rotation du moteur. Dans le cas d'outil avec des mouvements discontinus, la dynamo génère une forte intensité par à-coups, ce qui n'est pas pratique pour charger une batterie. Cette énergie est écrêtée et une part importante est perdue.

Il existe donc un réel besoin d'une technique plus efficace de production d'énergie électrique à partir des mouvements discontinus produits par un outil industriel.

Plus généralement, l'énergie électrique produite peut être utilisée pour d'autres équipements qui peuvent aussi améliorer l'utilisation d'outils pneumatiques. Il peut en effet être utile d'équiper ces outils de moyen de communication à courte portée (par du Wifi ou du Bluetooth) pour transmettre les résultats d'un vissage ou d'un dévissage, pour alimenter un signal sonore ou lumineux signal un état de l'outil ou pour le localiser au sein d'une chaîne de production. L'énergie électrique peut également alimenter des capteurs pour mesurer le couple, pour comptabiliser le temps d'utilisation de l'outil, pour détecter des chocs, et/ou pour enregistrer dans une mémoire les mesures effectuées par ces capteurs.

A l'instar d'une source lumineuse, ces équipements ont besoin d'électricité pour fonctionner, cette énergie provenant d'un moyen fiable et performant. Un outil portatif industriel comprenant un moyen de génération d'une énergie électrique à partir de l'énergie cinétique de l'élément en mouvement est connu du document US 2011/109093 A1.

### 3. Objectifs de l'invention

L'invention a notamment pour objectif d'apporter une solution efficace à au moins certains de ces différents problèmes.

En particulier, selon au moins un mode de réalisation, un objectif de l'invention est de produire une énergie électrique à partir d'une énergie cinétique et ceci indépendamment du moment où les pièces sont en mouvement.

Un autre objectif de l'invention, selon au moins un mode de réalisation, est de récupérer le maximum d'énergie électrique produite par les mouvements et de l'emmagasiner dans une batterie embarquée de façon à pouvoir l'utiliser à tout moment ensuite.

Un autre objectif de l'invention est, selon au moins un mode de réalisation, de produire de l'énergie électrique destinée à alimenter des moyens d'éclairage, de communication, de mesure et de calcul.

### 4. Présentation de l'invention

Pour ceci, l'invention propose un outil portatif à fonctionnement discontinu équipé d'un moteur pneumatique et d'un élément animé en mouvement de manière intermittente par le moteur au moyen d'une chaine cinématique, comprenant un moyen de génération d'une énergie électrique à partir de l'énergie cinétique de l'élément en mouvement. L'outil comprend en outre, au moins un supercondensateur apte à stocker l'énergie électrique produite par le moyen de génération, et au moins une batterie, ladite batterie étant au moins chargée par le supercondensateur lorsque le moyen de génération ne produit plus d'énergie électrique.

De cette manière, l'utilisation combinée d'un supercondensateur et d'une batterie permet d'alimenter plus longtemps des accessoires embarqués sur l'outil ou relié électriquement à lui. L'outil récupère le maximum d'énergie électrique produite par les mouvements et l'emmagasine dans une batterie embarquée de façon à pouvoir l'utiliser à tout moment ensuite.

Selon un premier mode de réalisation, l'outil comporte un convertisseur de tension apte à être alimenté par le supercondensateur et/ou par le moyen de génération pour fournir une tension constante et régulée appliquée aux bornes de la batterie. De cette manière, la charge de la batterie est mieux régulée et la longévité est optimale.

Selon un autre mode de réalisation, le moyen de génération de l'énergie électrique est une génératrice fournissant une tension alternative et reliée à un pont de diode de redressement. De cette manière, la source de l'énergie électrique est facile à réaliser et à embarquer sur un outil.

Selon un autre mode de réalisation, l'outil comporte au moins un accessoire fonctionnant à l'énergie électrique, ledit accessoire étant apte à être alimenté par l'énergie électrique stockée dans ladite batterie. De cette manière, un accessoire peut encore être alimenté même si le supercondensateur a fourni toute son énergie.

Selon un autre mode de réalisation, le convertisseur de tension est apte à être alimenté par la batterie pour fournir une tension constante et régulée audit accessoire. De cette manière, ce mode de fourniture d'énergie convient à des détecteurs nécessitant une tension bien régulée.

Selon un autre mode de réalisation, l'accessoire fait partie de l'ensemble des accessoires suivants : dispositif de mesure de couple, dispositif de mesure de vibrations, dispositif de mesure de température, dispositif de mesure de pression, dispositif de mesure de débit, dispositif de mesure de position et/ou d'orientation et/ou de mouvement, dispositif d'émission sonore, dispositif d'affichage, dispositif d'éclairage, système de géolocalisation, système de communication, et système d'enregistrement de données. De cette manière, ce système peut alimenter un grand nombre d'accessoires différents.

Selon un autre mode de réalisation, l'outil comporte un système d'éclairage alimenté par ledit supercondensateur. De cette manière, l'outil peut éclairer une zone de travail, sans nécessiter de circuits électroniques complexes.

Selon un autre mode de réalisation, l'outil comporte une gâchette dont l'appui déclenche le mouvement du moteur, et un moyen de commande du système d'éclairage, le moyen de commande déclenchant l'allumage dudit système d'éclairage lors d'un appui sur ladite gâchette de l'outil. De cette manière, l'utilisateur de l'outil voit sa zone de travail éclairée dès qu'il l'utilise.

Selon un autre mode de réalisation, le moyen de commande déclenche l'extinction dudit système d'éclairage à la fin d'une durée déterminée après le relâchement de la gâchette de l'outil. De cette manière, le système de contrôle de l'éclairage économise l'énergie emmagasinée.

Selon un autre mode de réalisation, l'outil est une clé à choc.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[fig.1]

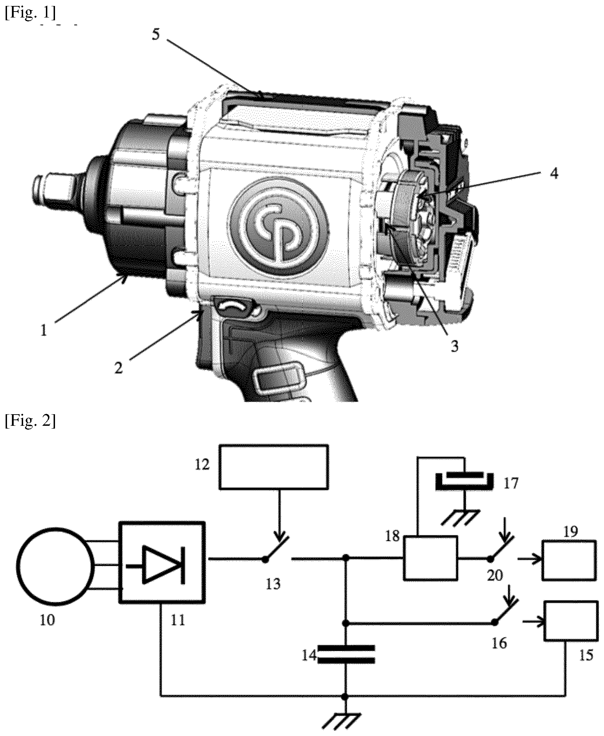

   la figure 1 illustre une vue en perspective d'un outil portatif à fonctionnement discontinu selon un exemple de réalisation ;
[fig.2]
   la figure 2 illustre un schéma électrique présentant les principaux éléments permettant de générer de l'énergie électrique à partir d'une énergie cinématique ;
[fig.3]

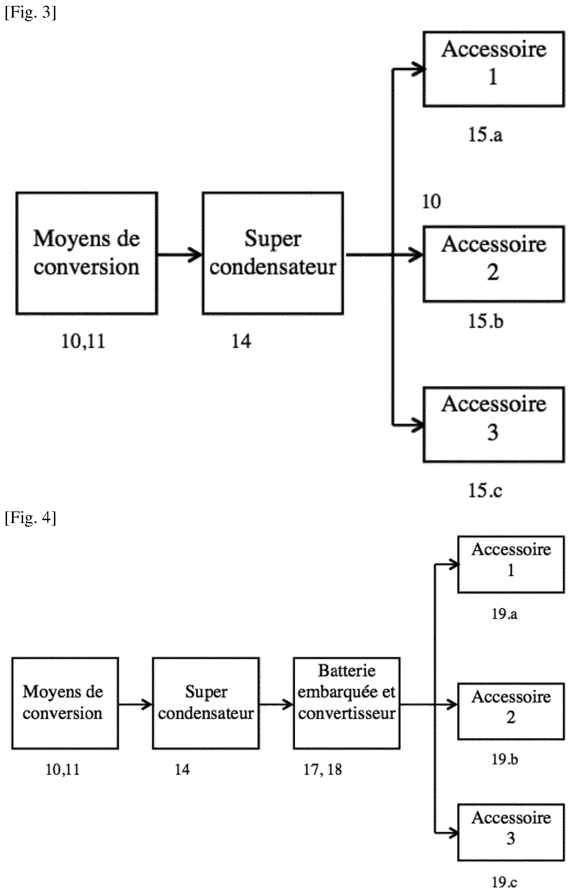

   la figure 3 illustre un exemple de vue d'une chaine de production d'énergie en vue de la simple alimentation d'un moyen d'éclairage non régulé en tension ;
[fig.4]
   la figure 4 illustre un exemple de vue d'une chaine de production d'énergie en vue de l'alimentation d'équipements embarqués sur un outil et nécessitant une tension mieux régulée.

### 6. Description de modes de réalisation particuliers

On présente en relation avec la Fig. 1, un outil portatif à fonctionnement discontinu équipé d'un moteur pneumatique et d'un élément animé en mouvement de manière intermittente. L'outil 1 représenté est typiquement une clé à choc pneumatique. Un tel outil est relié à un tuyau d'alimentation d'amené d'un gaz sous pression et est équipé d'une gâchette 2. L'appui sur ladite gâchette déclenche l'ouverture d'un clapet libérant le gaz qui fait tourner une turbine 3 et un moteur 4 déclenchant la rotation du mandrin et la génération d'impact.

Sur un tel outil à impact, le temps de mise en rotation du moteur est très court (entre 5 et 50 impacts de 5 à 200 ms en 1 seconde). La génératrice électrique solidarisée au moteur produit donc de l'énergie en grande quantité mais pendant de courts moments. L'invention permet de récupérer le maximum d'énergie produite et de l'emmagasiner dans un système de stockage 5 comportant notamment un supercondensateur et une batterie associée. De cette manière, il est possible d'utiliser cette énergie un long moment après qu'elle ait été produite, par exemple un mois après. La solution décrite présente un bon compromis entre la compacité, le poids, la rapidité de charge, le faible taux de décharge et le prix.

L'invention permet ainsi de récupérer l'énergie à la fois en mode continu dit « freespeed » et en mode impact.

Le rapport de vitesse entre le mode impact et freespeed est élevé et implique de pouvoir récolter de l'énergie à partir d'une large gamme de tension en sortie de générateur. A partir de 1 Volt pour récupérer l'énergie de pulses, la tension en vitesse maximale pouvant être supérieure de 10 fois.

La Fig.2 illustre un schéma électrique présentant les principaux éléments permettant de générer de l'énergie électrique à partir d'une énergie cinématique. L'outil 1 est doté d'une génératrice 10 montée sur le rotor de l'outil qui produit un courant alternatif lorsque le rotor est en rotation, quel que soit son sens. La bobine est avantageusement montée pour produire une tension en triphasé. La tension est transmise à un pont redresseur à diode 11 pour produire une tension redressée. Un circuit de contrôle appelé par la suite, « unité centrale » 12 gère au moins la charge des condensateurs et de la batterie du système de stockage 5. Cette unité centrale commande l'état d'un interrupteur 13 qui contrôle le passage du courant en provenance du pont de redressement 11 vers un supercondensateur 14.

Le vocable « supercondensateur » désigne un condensateur d'une capacité supérieure à 100 millifarads, il est très généralement polarisé. L'unité centrale 12 mesure la tension au niveau des bornes du supercondensateur et dès que celle-ci dépasse sa tension nominale, 5 volts par exemple, alors l'interrupteur 13 est ouvert, limitant ainsi la montée en tension du condensateur et protégeant des surtensions. L'unité centrale peut être un simple comparateur fonctionnant à très basse tension <1Volt, alimenté par un circuit très basse consommation (référence de tension). Dans un autre mode de réalisation, l'unité centrale peut être un microcontrôleur et peut piloter des interrupteurs pour contrôler l'alimentation d'accessoires, comme décrit par la suite.

Lorsque la tension redescend en dessous de la tension nominale du supercondensateur, l'interrupteur 13 est fermé. L'électricité produite par le pont redresseur 11 charge le supercondensateur 14 lorsque l'interrupteur 13 est fermé, et peut également alimenter un premier accessoire 15 en fermant un second interrupteur 16. Ce premier accessoire est par exemple un moyen d'émission de lumière, notamment une ou plusieurs diodes LED. Ce type d'accessoire ne nécessite pas pour fonctionner une alimentation bien régulée et une tension d'alimentation comprise dans un intervalle étroit. Dans certain cas, on peut noter que l'amplitude lumineuse du moyen d'émission de lumière renseigne de la charge du supercondensateur.

Un supercondensateur se décharge en faisant baisser la tension à ses bornes, ce qui empêche certains composants de fonctionner. De plus, une fois que le condensateur est complètement chargé, l'énergie qui lui est ensuite fournie, est perdue. L'invention prévoit d'adjoindre une batterie 17 qui est chargée à l'aide de la tension aux bornes du supercondensateur 14. La tension nominale de chargement de la batterie 17 est produite par un convertisseur 18 DC/DC (DC signifiant « Direct Current » en anglais ou « courant continu » en français) qui fournit une tension de sortie constante à partir d'une tension d'entrée fluctuante, comme c'est le cas lorsque le condensateur se décharge. De cette manière, la batterie 17 se charge en utilisant l'énergie stockée par le supercondensateur lorsque la génératrice 10 ne produit plus d'électricité.

L'énergie stockée dans la batterie est disponible à tout moment en utilisant le convertisseur DC/DC 18 qui extrait l'électricité stockée sous forme électrochimique et la fournit à des accessoires 19 qui ont besoin d'une tension d'alimentation mieux régulée. Selon ce schéma, il n'est pas obligatoire que la tension de la batterie soit égale à celle transmise à ces seconds accessoires. L'alimentation de ces seconds accessoires s'effectue sous le contrôle d'un troisième interrupteur 20.

Ces seconds accessoires 19 sont par exemple :
- un dispositif de mesure de couple, typiquement une ou plusieurs jauge(s) de contrainte fixé(es) sur un élément de la chaîne de transmission qui se déforme au cours du travail,
- un dispositif de mesure de vibrations, typiquement un accéléromètre, associé à un détecteur de chutes de l'outil et d'un moyen de comptabilisation du nombre de chutes,
- un dispositif de mesure de température,
- un dispositif de mesure de pression,
- un dispositif de mesure de débit,
- un dispositif de mesure de position et/ou d'orientation et/ou de mouvement du type accéléromètre, gyroscope, gyromètre,
- un dispositif d'émission sonore, typiquement un buzzer,
- un dispositif d'affichage, typiquement des voyants lumineux de couleur (technologie LED),
- un dispositif d'éclairage, typiquement fonctionnant par flash pour économiser la batterie, par exemple pour une fonction de localisation visuelle
- un système de géolocalisation, typiquement un transpondeur,
- un système de communication de technologie Bluetooth, ou Wifi, ou tout autre moyen de communication à courte portée,
- un système d'enregistrement de données, par exemple un identifiant de l'outil, typiquement une mémoire électronique.

Ces accessoires qui ont généralement des fonctions électroniques, possèdent des puissances de consommation d'énergie très différentes et nécessitent une gestion spécifique. Les accessoires ne sont pas uniquement des éléments solidarisés à l'outil mais peuvent aussi être des éléments électriquement raccordés à lui, par des fils par exemple.

L'invention couvre bien évidemment le cas où l'outil alimente plusieurs accessoires. Par exemple, l'outil 1 dispose d'un détecteur de choc transmettant des signaux à l'unité centrale 12 qui les comptabilise et met à jour dans une mémoire un compteur de chutes de cet outil. Lorsque ce total atteint un seuil critique, l'unité centrale émet un message via une liaison radio pour déclencher une opération de maintenance.

Après avoir décrit les différents éléments matériels constituant l'invention, nous allons décrire comment ceux-ci coopèrent.

Au repos, l'interrupteur 13 est ouvert, et se ferme dès que la tension en sortie du pont de redressement 11 atteint 1 Volt pour charger le supercondensateur 14. Lorsque la gâchette 2 de l'outil est enfoncée, le supercondensateur se charge et fournit de l'énergie au convertisseur DC/DC 18, ce dernier commence à charger la batterie 17. Un premier accessoire 15 peut alors être alimenté par la tension aux bornes du supercondensateur en fermant l'interrupteur 16. Le convertisseur peut également fournir aux seconds accessoires 19 une tension bien régulée en utilisant l'énergie provenant de la génératrice 10 et du point de redressement 11. L'alimentation des seconds accessoires 19 s'effectue en fermant l'interrupteur 20.

Lorsque l'outil s'arrête de fonctionner par le relâchement de la gâchette, le supercondensateur 14 n'est plus chargé par la génératrice 10 et le pont de redressement 11 et voit sa tension chuter en alimentant le convertisseur 18 qui continue à charger la batterie 17. A un certain moment, la tension est trop faible pour faire fonctionner le convertisseur et la charge de la batterie s'interrompt. Ce seuil de tension en dessous duquel le convertisseur cesse de charger la batterie peut par exemple être de 1 Volt. Si la tension fournie par le convertisseur est supérieure à un certain seuil, par exemple 4 Volts, la charge de la batterie est interrompue.

Le convertisseur peut cependant continuer à fournir une tension bien régulée en utilisant l'énergie stockée dans la batterie, pour la fournir aux seconds accessoires 19. On voit donc que ce système permet à une batterie d'alimenter des accessoires au cours d'une durée plus longue que dans le cas de l'utilisation d'un supercondensateur seul. Lorsque la tension de la batterie descend elle-aussi en dessous d'un certain seuil, 3 volts par exemple, le convertisseur n'a plus assez d'énergie pour fonctionner et plus aucun accessoire ne peut alors être alimenté.

Les seuils de tension précisés ci-avant sont donnés à titre d'exemple et dépendent notamment de la technologie de batterie utilisée.

La Fig. 3 illustre un exemple de vue d'une chaine de production d'énergie en vue de la simple alimentation d'un moyen d'éclairage non régulé en tension. Selon ce premier mode de réalisation, les moyens de conversion (génératrice 10 et pont de redressement 11) fournissent une tension redressée pour charger le supercondensateur 14. La tension aux bornes du condensateur est utilisée pour alimenter un ou plusieurs premiers accessoires 15.a, 15.b, 15.c du type moyen d'éclairage à LED.

La Fig. 4 illustre un exemple de vue d'une chaine de production d'énergie en vue de l'alimentation d'équipements embarqués sur un outil et nécessitant une tension plus régulée. Selon ce mode particulier de réalisation, les moyens de conversion charge le supercondensateur qui charge la batterie à travers le convertisseur DC/DC. La tension de sortie fournie par le convertisseur sert à alimenter un ou plusieurs accessoires 19.a, 19.b, 19.c du type mesure à l'aide de capteur électronique et circuit de communication.

Il est bien entendu que les deux configurations décrites par les Fig. 3 et Fig. 4 sont parfaitement combinables, et qu'il est possible pour un outil d'alimenter au même moment un accessoire 15 à partir d'un supercondensateur 14 et un autre accessoire 19 à partir de la batterie 17.

Selon un mode simple de réalisation, les accessoires 15 et/ou 19 peuvent être mis sous tension par des interrupteurs 16 et 20 manœuvrés manuellement par l'utilisateur de l'outil. Selon une variante de réalisation, l'allumage et l'extinction de ces accessoires sont commandés par des boutons poussoirs accessibles sur le carter de l'outil, et reliés électriquement à l'unité centrale 12. Prenons le cas où l'unité centrale reçoit un signal et détermine si la commande peut aboutir, or la charge de la batterie est juste suffisante pour alimenter l'unité centrale et pas assez pour mettre sous tension un accessoire consommant beaucoup d'énergie, dans ce cas, la commande restera sans effet. Selon une autre variante de réalisation, l'appui sur la gâchette est détecté par un capteur qui envoie un signal à l'unité centrale 12. A la réception du signal, l'unité centrale 12 commande la fermeture d'un interrupteur 16 permettant d'alimenter le système d'éclairage. Selon un perfectionnement, l'unité centrale déclenche l'extinction du système d'éclairage à la fin d'une durée déterminée après le relâchement de la gâchette de l'outil. De cette manière, la zone de travail devant l'outil peut rester éclairée un certain temps après l'utilisation de l'outil.

Bien que décrits à travers un certain nombre d'exemples de réalisation détaillés, les dispositifs proposés comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains dispositifs décrits ci-dessus n'incorporent pas la totalité des modules et fonctions prévus pour les modes de réalisation décrits.

## Revendications

1. Outil portatif (1) à fonctionnement discontinu équipé d'un moteur pneumatique et d'un élément animé en mouvement de manière intermittente par le moteur au moyen d'une chaine cinématique, comprenant un moyen de génération (10, 11) d'une énergie électrique à partir de l'énergie cinétique de l'élément en mouvement, l'outil comprenant en outre au moins un supercondensateur (14) apte à stocker l'énergie électrique produite par le moyen de génération, et **caractérisé en ce qu'**il comprend en outre au moins une batterie (17), ladite batterie étant chargée par le supercondensateur (14) lorsque le moyen de génération (10, 11) ne produit plus d'énergie électrique.

2. Outil selon la revendication 1, **caractérisé en ce qu'**il comporte un convertisseur de tension (18) apte à être alimenté par le supercondensateur (14) et/ou par le moyen de génération (10,11) pour fournir une tension constante et régulée appliquée aux bornes de la batterie (17).

3. Outil selon l'une quelconque des revendications 1 ou 2, **caractérisé en ce que** le moyen de génération de l'énergie électrique est une génératrice (10) fournissant une tension alternative et reliée à un pont de diode de redressement (11).

4. Outil selon l'une quelconque des revendications précédentes, **caractérisé en ce qu'**il comporte au moins un accessoire (19) fonctionnant à l'énergie électrique, ledit accessoire étant apte à être alimenté par l'énergie électrique stockée dans ladite batterie.

5. Outil selon les revendications 2 et 4 **caractérisé en ce que** le convertisseur de tension (18) est apte à être alimenté par la batterie pour fournir une tension constante et régulée audit accessoire.

6. Outil selon l'une quelconque des revendications 4 et 5, **caractérisé en ce que** ledit au moins accessoire (19) fait partie de l'ensemble des accessoires suivants : dispositif de mesure de couple, dispositif de mesure de vibrations, dispositif de mesure de température, dispositif de mesure de pression, dispositif de mesure de débit, dispositif de mesure de position et/ou d'orientation et/ou de mouvement, dispositif d'émission sonore, dispositif d'affichage, dispositif d'éclairage, système de géolocalisation, système de communication, et système d'enregistrement de données.

7. Outil selon l'une quelconque des revendications 1 à 3 **caractérisé en ce qu'**il comporte un système d'éclairage alimenté par ledit supercondensateur.

8. Outil selon la revendication 7, **caractérisé en ce qu'**il comporte une gâchette (2) dont l'appui déclenche le mouvement du moteur, et un moyen de commande du système d'éclairage, le moyen de commande déclenchant l'allumage dudit système d'éclairage lors d'un appui sur ladite gâchette de l'outil.

9. Outil selon la revendication 8, **caractérisé en ce que** le moyen de commande déclenche l'extinction dudit système d'éclairage à la fin d'une durée déterminée après le relâchement de la gâchette de l'outil.

10. Outil selon l'une quelconque des revendications précédentes, **caractérisé en ce que** ledit outil (1) est une clé à choc.

## Patentansprüche

1. Tragbares Werkzeug (1) mit diskontinuierlichem Betrieb, das mit einem pneumatischen Motor und einem Element, das von dem Motor mittels eines Antriebsstrangs intermittierend in Bewegung versetzt wird, ausgestattet ist, umfassend ein Erzeugungsmittel (10, 11) einer elektrischen Energie aus der kinetischen Energie des sich bewegenden Elements, wobei das Werkzeug ferner wenigstens einen Superkondensator (14), der geeignet ist, die elektrische Energie zu speichern, die von dem Erzeugungsmittel erzeugt wird, umfasst, und **dadurch gekennzeichnet, dass** es ferner wenigstens eine Batterie (17) umfasst, wobei die Batterie durch den Superkondensator (14) geladen wird, wenn das Erzeugungsmittel (10, 11) keine elektrische Energie mehr erzeugt.

2. Werkzeug nach Anspruch 1, **dadurch gekennzeichnet, dass** es einen Spannungswandler (18) aufweist, der geeignet ist, von dem Superkondensator (14) und/oder dem Erzeugungsmittel (10, 11) gespeist zu werden, um eine konstante und geregelte Spannung bereitzustellen, die an die Anschlüsse der Batterie (17) angelegt wird.

3. Werkzeug nach einem der Ansprüche 1 oder 2, **dadurch gekennzeichnet, dass** das Erzeugungsmittel der elektrischen Energie ein Generator (10) ist, der eine Wechselspannung bereitstellt und mit einer Gleichrichterdiodenbrücke (11) verbunden ist.

4. Werkzeug nach einem der vorhergehenden Ansprüche, **dadurch gekennzeichnet, dass** es wenigstens ein Zubehör (19) aufweist, das mit elektrischer Energie arbeitet, wobei das Zubehör geeignet ist, durch die elektrische Energie gespeist zu werden, die in der Batterie gespeichert ist.

5. Werkzeug nach den Ansprüchen 2 und 4, **dadurch gekennzeichnet, dass** der Spannungswandler (18) geeignet ist, von der Batterie gespeist zu werden, um das Zubehör mit einer konstanten und geregelten Spannung zu versorgen.

6. Werkzeug nach einem der Ansprüche 4 und 5, **dadurch gekennzeichnet, dass** das wenigstens eine Zubehör (19) zu der Menge der folgenden Zubehöre gehört: Drehmomentmessvorrichtung, Vibrationsmessvorrichtung, Temperaturmessvorrichtung, Druckmessvorrichtung, Durchsatzmessvorrichtung, Positions- und/oder Orientierungs- und/oder Bewegungsmessvorrichtung, Tonabgabevorrichtung, Anzeigevorrichtung, Beleuchtungsvorrichtung, Geolokalisierungssystem, Kommunikationssystem und Datenspeichersystem.

7. Werkzeug nach einem der Ansprüche 1 bis 3, **dadurch gekennzeichnet, dass** es ein Beleuchtungssystem aufweist, das von dem Superkondensator gespeist wird.

8. Werkzeug nach Anspruch 7, **dadurch gekennzeichnet, dass** es einen Auslöser (2), dessen Drücken die Bewegung des Motors auslöst, und ein Steuermittel des Beleuchtungssystems aufweist, wobei das Steuermittel bei einem Druck auf den Auslöser des Werkzeugs das Einschalten des Beleuchtungssystems auslöst.

9. Werkzeug nach Anspruch 8, **dadurch gekennzeichnet, dass** das Steuermittel das Ausschalten des Beleuchtungssystems am Ende einer bestimmten Dauer nach dem Loslassen des Auslösers des Werkzeugs auslöst.

10. Werkzeug nach einem der vorhergehenden Ansprüche, **dadurch gekennzeichnet, dass** das Werkzeug (1) ein Schlagschrauber ist.

## Claims

1. Portable tool (1) with intermittent operation equipped with a pneumatic motor and an element set into movement intermittently by the motor by means of a kinematic linkage, comprising an electrical energy generation means (10, 11) from the kinetic energy of the element in movement, the tool further comprising at least one supercapacitor (14) configured to store the electrical energy produced by the generation means, and **characterised in that** it further comprises at least one battery (17), said battery being charged by the supercapacitor (14) when the generation means (10, 11) is no longer producing electrical energy.

2. Tool according to claim 1, **characterised in that** it includes a voltage converter (18) configured to be powered by the supercapacitor (14) and/or by the generation means (10, 11) to supply a constant and regulated voltage applied to the terminals of the battery (17).

3. Tool according to any one of claims 1 or 2, **characterised in that** the electrical energy generation means is a generator (10) supplying an alternating voltage and connected to a rectifying diode bridge (11).

4. Tool according to any one of the preceding claims, **characterised in that** it includes at least one accessory (19) operating on electrical energy, said accessory being configured to be powered by the electrical energy stored in said battery.

5. Tool according to claims 2 and 4 **characterised in that** the voltage converter (18) is configured to) be powered by the battery to supply a constant and regulated voltage to said accessory.

6. Tool according to any one of claims 4 and 5, **characterised in that** said at least accessory (19) belongs to the set of the following accessories: torque measuring device, vibration measuring device, temperature measuring device, pressure measuring device, flow rate measuring device, position and/or orientation and/or movement measuring device, sound emission device, display device, lighting device, geolocation system, communication system, and data recording system.

7. Tool according to any one of claims 1 to 3 **characterised in that** it includes a light system powered by said supercapacitor.

8. Tool according to claim 7, **characterised in that** it includes a trigger (2) the pressing of which activates the movement of the motor, and a lighting system control means, the control means activating the switching-on of said lighting system when said tool trigger is pressed.

9. Tool according to claim 8, **characterised in that** the control means activates the switching-off of said lighting system at the end of a defined duration after the release of the tool trigger.

10. Tool according to any one of the preceding claims, **characterised in that** said tool (1) is an impact wrench.
